# EUROPÄISCHE PATENTSCHRIFT

(11) **EP 1 844 357 B1**
(45) Veröffentlichungstag und Bekanntmachung des Hinweises auf die Patenterteilung: **25.01.2012**
(21) Anmeldenummer: 05825268.5
(22) Anmeldetag: 06.12.2005
(51) Int. Cl.: G02B 6/44, G01D 5/353

(54) **BANDFÖRMIGER LICHTLEITER MIT MEHREREN OPTISCHEN EINZELFASERN UND VERFAHREN ZU DESSEN HERSTELLUNG**
FIBRE OPTIC RIBBON WITH SEVERAL INDIVIDUAL OPTICAL FIBRES AND METHOD FOR PRODUCTION THEREOF
GUIDE D'ONDES OPTIQUES EN BANDE A PLUSIEURS MONOFIBRES OPTIQUES ET PROCEDE DE FABRICATION DUDIT GUIDE

(30) Priorität: 09.12.2004 DE 102004059932
(43) Veröffentlichungstag der Anmeldung: 17.10.2007
(73) Patentinhaber: SIEMENS AKTIENGESELLSCHAFT, 80333 München (DE)
(72) Erfinder: FRANKE, Martin, 14089 Berlin (DE); HAPPEL, Tobias, 10627 Berlin (DE); MIEDREICH, Mathias, 92318 Neumarkt (DE); NOWSCH, Helmut, 93059 Regensburg (DE)
(86) Internationale Anmeldenummer: PCT/EP2005/056496
(87) Internationale Veröffentlichungsnummer: WO 2006/061370

(56) Entgegenhaltungen:
- EP-A- 0 784 220
- EP-B- 0 702 780
- WO-A-2004/089699
- DE-A1- 4 407 763
- GB-A- 2 208 945
- US-A1- 2002 081 072

## Beschreibung

Die Erfindung betrifft einen bandförmigen Lichtleiter mit einer Vielzahl parallel verlaufender, optischer Einzelfasern, die von einer Ummantelung umgeben sind, ein Trägerband in der Ummantelung vorgesehen ist, in dem die Einzelfasern unter Einhaltung jeweils eines Zwischenraumes zwischen benachbarten Einzelfasern vollständig eingebettet sind.

Ein bandförmiger Lichtleiter der eingangs angegebenen Art ist beispielsweise aus der DE 690 23 799 T2 bekannt. Dieser Lichtleiter weist mehrere Einzelfasern auf, die in einer längs klappbaren Ummantelung gelagert sind. Die Ummantelung stellt weiterhin im Inneren eine Struktur zur Verfügung, die bei Ausüben eines Drucks auf die Ober- bzw. Unterseite des durch die Ummantelung gebildeten Bandes zu einer lokalen Verformung der im Inneren verlaufenden Lichtleiter führt. Diese Verformung wirkt sich auf das Dämpfungsverhalten der Einzelfasern aus, so dass durch Auswerten eines durch die Einzelfasern geleiteten Lichtsignals ein Sensorsignal zur Verfügung steht, welches ein Maß für den auf die Ummantelung lokal wirkenden Druck ermöglicht.

Gemäß der DE 33 28 948 A1, der DE 44 16 545 A1 und der DE 93 21 083 U1 sind lichtleitende Kabel bekannt, in denen optische Einzelfasern zu einem Bündel verarbeitet werden. Diese werden als Bündel mit Ummantelungen versehen, wobei das Bündel auch aus in einer Ebene nebeneinander angeordneten Lichtleitern bestehen kann, wodurch das Kabel einen bandförmigen Querschnitt erhält. Gemäß der DE 93 21 083 U1 ist es weiterhin möglich, die Einzelfasern des Lichtleiters zunächst in bändchenförmiges Lichtwellenleiter-Element einzubetten und dieses wiederum in eine kammerartige Aussparung eines extrodierten Kunststoffbandes einzuschieben. Hierdurch entsteht ein Lichtleiter, der einen verbesserten Widerstand gegenüber mechanischen Beanspruchungen des Lichtwellenleiters aufweist.

Gemäß der GB 2 208 945 A ist ein bandförmiger Lichtleiter beschrieben, der eine Vielzahl von Einzelfasern aufweist. Diese sind in einem Trägerband fixiert, wobei dieses Trägerband zusätzlich in einer aus zwei Halbschalen bestehenden Ummantelung gehalten wird. Diese Ummantelung kann mit einer Ausnehmung versehen sein, durch die ein Auskoppelelement eingeführt werden kann, welches auch durch das Trägerband hindurch direkt auf die Oberfläche einer der optischen Einzelfasern aufgesetzt werden kann. Hierbei wird auf die Einzelfaser ein Druck ausgeübt, welcher zu Mikroverformungen derselben führt. Diese Mikroverformungen bewirken, dass ein gewisser Anteil des durch die Einzelfasern geleiteten Lichtes in das Auskoppelelement ausgekoppelt wird.

Gemäß der US 2002/0081072 A1 ist es weiterhin bekannt, dass die Enden von Einzelfasern, die in einem bandförmigen Lichtleiter zusammengefasst sind, durch eine Ätzbehandlung verändert werden können. Hierbei kann insbesondere eine Verringerung des Durchmessers der Einzelfasern erfolgen, so dass diese zwecks Herstellung einer optischen Verbindung zu anderen Einzelfasern einfacher gehandhabt werden können. Ferner stellen WO 2004/089699 A1 und EP 0702 780 B1 Dokumente zum stand der Technik dar.

Die Aufgabe der Erfindung besteht darin, einen bandförmigen Lichtleiter anzugeben, welcher einfach hergestellt werden kann und dabei vergleichsweise zuverlässige Sensorsignale erzeugt.

Diese Aufgabe wird mit einem bandförmigen Lichtleiter nach Anspruch 1 erfindungsgemäß dadurch gelöst, dass die Einzelfasern jeweils in definierten Teilabschnitten eine das optische Dämpfungsverhalten erhöhende Oberflächenstruktur aufweisen. Diese Oberflächenstrukturen können mit unterschiedlichen Behandlungsverfahren für die Oberfläche der Einzelfasern hergestellt werden, wobei gleichzeitig das Material des Trägerbandes von den Einzelfasern entfernt werden kann. Wenn das Dämpfungsverhalten der Einzelfasern in den definierten Teilabschnitten erhöht wird, so lässt sich eine Veränderung der Biegung der Einzelfasern in diesen Teilabschnitten vorteilhaft mit einer erhöhten Empfindlichkeit ermitteln. Damit kann der Lichtleiter, wie bereits erwähnt, als Sensorband für Biegeverformungen zum Einsatz kommen.

Das Trägerband erfüllt dabei zwei Aufgaben. Zum einen wird durch das Trägerband die zuverlässige Fixierung der Einzelfasern erreicht, so dass auch bei einem Verlegen des bandförmigen Lichtleiters als Sensorband eine zuverlässige Positionierung der Einzelfasern innerhalb des Bandes gewährleistet ist. Diese bleibt auch erhalten, wenn das Sensorband einem vorbestimmten Kurvenverlauf folgt, wie dies z. B. der Fall ist, wenn der bandförmige Lichtleiter als Fußgängersensor im Stoßfänger eines Kraftfahrzeugs verlegt wird. Die zweite Aufgabe besteht darin, einen Zwischenraum zwischen den Einzelfasern zuverlässig aufrechtzuerhalten, so dass diese nach Fixierung auf dem Trägerband einer weiteren Oberflächenbehandlung unterworfen werden können. Dabei können die Einzelfasern abschnittweise in ihrer Oberflächenstrukturierung verändert werden, um in diesen Abschnitten das Dämpfungsverhalten gezielt zu beeinflussen. Diese Abschnitte sind dann die sensitiven Zonen, welche bei einer Veränderung der Biegung der Einzelfasern mit einer messbaren Änderung ihres Dämpfungsverhaltens reagieren.

Durch die vorherige Fixierung der Einzelfasern auf einem Trägerband vor einer Behandlung der Oberfläche der Einzelfasern ist vorteilhaft ein kostengünstiges Behandlungsverfahren durchführbar, da der Verband von Einzelfasern auf den Trägerband leicht zu handhaben ist und im Übrigen mehrere Einzelfasern gleichzeitig einer Behandlung unterworfen werden können. Die Zwischenräume zwischen den Einzelfasern gewährleisten auch bei Anwendung eines toleranzbehafteten Behandlungsverfahrens, dass jeweils nur die gewünschte Einzelfaser in ihrer Oberflächenstruktur verändert wird, ohne dass die Gefahr besteht, dass evtl. benachbarte Einzelfasern ungewollt durch das Behandlungsverfahren beschädigt werden könnte.

Gemäß der Erfindung ist auch vorgesehen, dass die Einzelfasern vollständig in das Trägerband eingebettet sind. Damit ist vorteilhaft eine Fixierung der Einzelfasern über den gesamten Umfang ihres Querschnitts möglich, wodurch eine besonders sichere Fixierung erfolgen kann. Außerdem werden dann die Zwischenräume zwischen den Einzelfasern mit dem Material des Trägerbandes gefüllt, so dass dieses hierdurch zusätzlich versteift wird und außerdem auch beim Betrieb des bandförmigen Lichtleiters eine Schutzwirkung entfaltet.

Weiterhin kann vorgesehen werden, dass in den Zwischenräumen passive Fasern angeordnet sind. Dies hat insbesondere den Vorteil, dass die Herstellung des Lichtleiters vereinfacht wird, da die passiven Fasern die Zwischenräume ausfüllen, so dass die Einhaltung der Zwischenräume zwischen den Einzelfasern automatisch gewährleistet ist. Außerdem können die optisch passiven Fasern aus einem im Verhältnis zu den Einzelfasern stabilen Material ausgebildet werden, um eine zusätzliche Versteifung des bandförmigen Lichtleiters zu erzielen. Die passiven Fasern können insbesondere aus einem optisch passiven Material bestehen, d. h. dass dieses keine lichtleitenden Eigenschaften aufweist. Soweit die Fasern jedoch lichtleitend sind, werden sie beim Betrieb des Sensorbandes nicht als Lichtleiter verwendet, bleiben also passiv, da sie keinen Anteil an der Generierung des optischen Messergebnisses haben.

Es ist vorteilhaft, wenn das Trägerband aus einem Material besteht, welches mittels Laserablation entfernt werden kann. Hierdurch wird das Trägerband mit den Einzelfasern einer Laserbearbeitung zugänglich, so dass vorteilhaft in einem Verfahrensschritt sowohl das Material des Trägerbandes entfernt werden als auch die Oberfläche der dann freigelegten Einzelfasern behandelt werden können.

Weiterhin bezieht sich die Erfindung auf ein Verfahren zum Erzeugen eines bandförmigen Lichtleiter nach Anspruch 4. Wie der bereits erwähnten DE 690 23 799 T2 zu entnehmen ist, umfasst ein solches Verfahren zumindest die parallel verlaufende Anordnung mehrerer Einzelfasern und die anschließende Ummantelung derselben, so dass diese innerhalb des durch die Ummantelung gebildeten Bandes fixiert sind.

Demnach besteht die Aufgabe der Erfindung auch darin, ein Verfahren zur Herstellung eines bandförmigen Lichtleiters anzugeben, welches sich einfach durchführen lässt.

Diese Erfindung wird mit dem oben angegebenen Verfahren erfindungsgemäß dadurch gelöst, dass optische Einzelfasern mit Hilfe eines Trägerbandes unter Einhaltung jeweiliger Zwischenräume parallel zueinander fixiert werden, die Oberflächenstruktur der Einzelfasern in definierten Teilabschnittenverändert wird und das Trägerband mit den Einzelfasern mit einer Ummantelung versehen wird. Durch die Verwendung eines Trägerbandes zur Fixierung der Einzelfasern kann vorteilhaft eine kostengünstige und großtechnische Herstellung des bandförmigen Lichtleiters gewährleistet werden, wie oben bereits genauer erläutert wurde. Die Fixierung ermöglicht insbesondere eine einfache Oberflächenbehandlung der Einzelfasern in jeweiligen Teilabschnitten zur Erzeugung eines optischen Sensorbandes. Dabei können die parallel verlaufenden Einzelfasern in einem Fertigungsschritt behandelt werden, wobei evtl. auftretende Fertigungsungenauigkeiten bei der Oberflächenbehandlung nicht ins Gewicht fallen, da durch Einhaltung der Zwischenräume zwischen den Einzelfasern trotz der auftretenden Toleranzen die benachbarten Einzelfasern durch die Oberflächenbehandlung nicht gefährdet werden.

Bei der Behandlung mittels des Lasers 15 bewirken Zwischenräume 16 zwischen den Einzelfasern 12, dass die jeweils benachbarten Einzelfasern bei der Behandlung nicht in Mitleidenschaft gezogen werden. Die benachbarten Einzelfasern liegen damit auch außerhalb des Bereiches, auf den der Laser trotz evtl. Fokussierung noch einwirkt, womit eine Beeinflussung der benachbarten Einzelfasern auf jeden Fall ausgeschlossen werden kann.

Um eine Beschädigung jeweils benachbarter Einzelfasern während der Oberflächenbehandlung der gewünschten Fasern zuverlässig zu verhindern, ist es vorteilhaft, die Zwischenräume 16 mit einer Größe zu bemessen, die unter Berücksichtigung der Fertigungstoleranzen bei der Veränderung der Oberflächenstruktur eine ungewollte Beschädigung jeweils dem zu behandelnden Teilabschnitt benachbart liegender Einzelfasern verhindert. Damit hängt also die Größe des Zwischenraumes von der Genauigkeit des Oberflächenbehandlungsverfahrens ab. Beispielsweise ist bei einem Behandeln der Oberfläche mittels Laser zu beachten, dass die dabei entstehende Wärmeentwicklung die benachbarten Einzelfasern unbeeinflusst lässt. Die Genauigkeit eines solchen Behandlungsverfahrens hängt also nicht nur von der Führung des Lasers bzw. dessen Fokussierung, sondern auch von der Energieentwicklung am Behandlungsort ab.

Weiterhin ist es vorteilhaft, wenn die Einzelfasern vollständig in das Trägerband eingebettet werden und der die Teilabschnitte abdeckende Teil des Trägerbandes vor der Veränderung der Oberflächenstruktur entfernt wird. Außerhalb der entsprechenden Teilabschnitte kann eine Führung der Einzelfasern in Trägerband damit vorteilhaft besonders zuverlässig erfolgen. Die Fixierung bleibt auch dann bestehen, wenn der bandförmige Lichtleiter beispielsweise als Sensorband im gebogenen Zustand verlegt wird. Dies ist von besonderer Bedeutung, da die oberflächenbehandelten Teilabschnitte jeweils in den Bereichen der zu erwartenden, zu detektierenden Biegung des Sensorbandes liegen müssen und daher innerhalb des Trägerbandes keine Verdrehung erfahren dürfen.

Bei Verwendung eines die Einzelfasern vollständig einbettenden Trägerbandes ist es besonders vorteilhaft, wenn die teilweise Entfernung des Trägerbandes und die Veränderung der Oberflächenstruktur der Teilabschnitte mit einem Laser vorgenommen wird. Diese beiden Fertigungsschritte können dann nämlich in einem einzigen Fertigungsschritt zusammengefasst werden, wobei der Energieeintrag des Laser in das Trägerband so eingestellt wird, dass dieser ausreicht, um gleichzeitig die Schicht des Trägerbandes auf dem Einzelleiter zu entfernen und die gewünschte Oberflächenbehandlung des Einzelleiters zu gewährleisten.

Weitere Einzelheiten der Erfindung werden im Folgenden anhand der Zeichnung beschrieben. In den Figuren sind gleiche oder sich entsprechende Zeichnungselemente mit jeweils den gleichen Bezugszeichen versehen und werden nur insoweit mehrfach erläutert, wie sich Unterschiede zwischen den einzelnen Figuren ergeben. Es zeigen
- Figur 1: den Querschnitt eines ersten Ausführungsbeispiels des erfindungsgemäßen bandförmigen Lichtleiters und
- Figur 2: den Querschnitt eines alternativen Ausführungsbeispiels des erfindungsgemäßen bandförmigen Leiters.

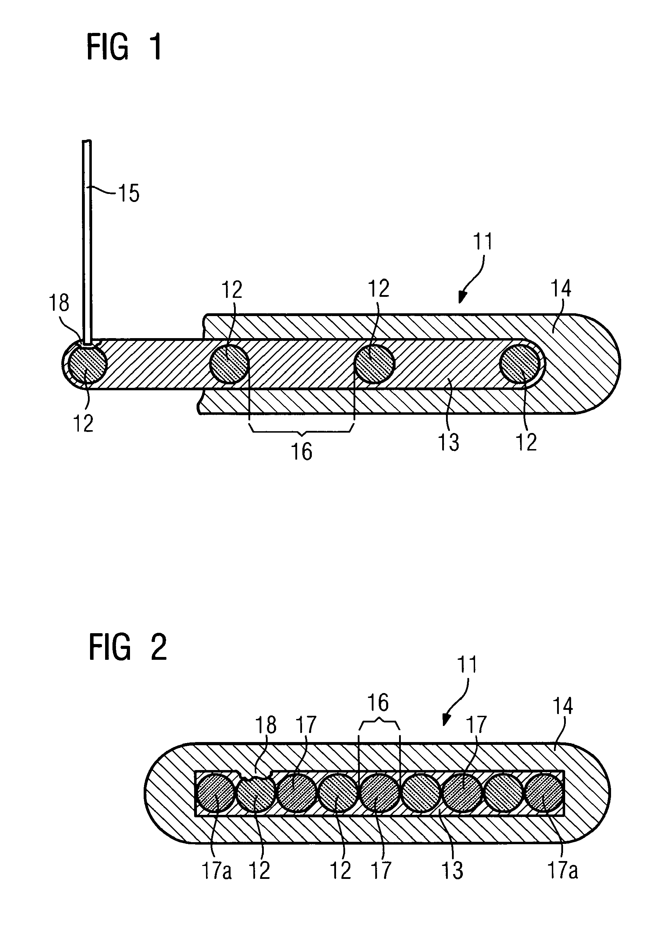

Ein bandförmiger Lichtleiter 11 gemäß Figur 1 weist vier Einzelfasern 12 auf, welche in einem Trägerband 13 vollständig eingeschlossen sind. In diesem Zustand, also ohne eine das Trägerband umgebende Ummantelung 14 (auf der linken Seite des Trägerbandes dargestellt), kann mittels eines angedeuteten Lasers 15 das Material des Trägerbandes in einem Teilbereich 18 der betreffenden Einzelfaser 12 entfernt und die Oberfläche mit einer Strukturierung versehen werden, welche ihr Dämpfungsverhalten vergrößert. Wird eine Laserbehandlung nur von einer Seite des Trägerbandes her durchgeführt (in Figur 1 von oben), so ist dieses Verfahren vorteilhaft besonders einfach durchführbar, da ein Wenden des Trägerbandes nicht notwendig ist. Damit die oberflächenbehandelten Teilbereiche im Trägerband eindeutig ausgerichtet sind, ist eine vollständige Einbettung der Einzelfasern 12 in dem Trägerband 13 vorgesehen, wobei der Einschluss aufgrund der Haftung an den Grenzflächen zwischen Einzelfasern 12 und Trägerband 13 eine Rotation der Einzelfasern innerhalb des Bandleiters 12 verhindert. Damit ist auch einer Verdrehung der oberflächenbehandelten Teilbereiche 18 entgegengewirkt.

Nach der Laserbehandlung wird das Trägerband 13 in die Ummantelung 14 eingebracht (beispielsweise durch Umspritzen des Trägerbandes). Damit werden auch die bei der Oberflächenbehandlung der Einzelfasern 12 in das Trägerband 13 eingebrachten Verletzungen ausgefüllt, so dass die Einzelfasern 12 wieder vollständig von einem Schutzmaterial umgeben sind. Das Material der Ummantelung 14 kann weiterhin so ausgewählt werden, dass dieses einen wirksamen Schutz gegen Umwelteinflüsse am Einsatzort des bandförmigen Lichtleiters gewährleistet.

Der bandförmige Lichtleiter gemäß Figur 2 besitzt einen ähnlichen Aufbau. Allerdings sind in den Zwischenräumen 16 optisch passive Fasern 17 angeordnet, die die Breite des Zwischenraumes definieren. Diese können bei einer Laserbehandlung (in Figur 2 nicht dargestellt) zusätzliche Strahlungsenergie des Lasers zum Schutz der jeweils benachbarten Einzelfasern 12 absorbieren. Zusätzlich ist bei geeigneter Wahl des Materials der optisch passiven Fasern eine Schutzfunktion bzw. eine Versteifung des bandförmigen Lichtleiters 11 möglich. Außer in den Zwischenräumen 16 kann eine optisch passive Faser 17a auch jeweils jenseits der äußersten Einzelfaser 12 angeordnet werden. Hierdurch werden auch in diesem Bereich dieselben Fertigungsbedingungen für die Oberflächenstrukturierung der Einzelfasern 12 vorgegeben. Somit vereinfacht sich die Durchführung der Oberflächenbehandlung der Einzelfasern, da diese für alle Einzelfasern mit genau denselben Fertigungsparametern durchgeführt werden kann.

In der Figur 2 ist weiter ein Teilabschnitt 18 einer der Einzelfasern 12 zu erkennen, wobei eine Oberflächenstrukturierung angedeutet ist. Im Übrigen lässt sich erkennen, dass in diesem Bereich das Material des Trägerbandes 13 entfernt ist, wobei anstelle dessen dieser Bereich durch das Material der Ummantelung 14 ausgefüllt ist.

## Patentansprüche

1. Bandförmiger Lichtleiter mit einer Vielzahl parallel verlaufender, optischer Einzelfasern (12), die von einer Ummantelung (14) umgeben sind, wobei ein Trägerband (13) in der Ummantelung (14) vorgesehen ist, in dem die Einzelfasern (12) unter Einhaltung jeweils eines Zwischenraumes (16) zwischen benachbarten Einzelfasern (12) eingebettet sind, wobei
die Einzelfasern (12) jeweils in definierten Teilabschnitten (18), in denen das Material des Trägerbandes (13) von den Einzelfasern (12) entfernt ist, von der Ummantelung (14) bedeckt sind, und sie eine das optische Dämpfungsverhalten erhöhende Oberflächenstruktur in den definierten Teilabschnitten (18) und wobei die Einzelfasern (12) bis die definierten Teilabschnitte (18) voll- standig in dem traserband (13) einge bettet sind, und wobei fermer die bereiche dieser Teilabschitte (18) durch des Material (der Ummantelung (14) ausgefüllt sind

2. Lichtleiter nach Anspruch 1,
**dadurch gekennzeichnet,**
**dass** in den Zwischenräumen (16) passive Fasern (17) angeordnet sind.

3. Lichtleiter nach einem der Ansprüche 1 oder 2,
**dadurch gekennzeichnet,**
**dass** das Trägerband (13) aus einem Material besteht, welches mittels Laserablation entfernt werden kann.

4. Verfahren zum Erzeugen eines bandförmigen Lichtleiters nach Anspruch 1, bei dem
- die optischen Einzelfasern (12) mit Hilfe des Trägerbandes (13) unter Einhaltung jeweiliger Zwischenräume (16) durch vollständiges Einbetten in das Trägesband (13) parallel zueinander fixiert werden,
- danach die Oberflächenstruktur der Einzelfasern (12) in definierten Teilabschnitten (18) bei einer Entfernung des Materials des Trägerbandes (13) verändert wird, und
danach das Trägerband (13) mit den Einzelfasern (12) mit der Ummantelung (14) versehen wird, wobei die Ummantelung (14) die Teilabschnitte (18) abdeckt und in den Teilabschnitten (18) eine das optische Dämpfungsverhalten erhöhende Oberflächenstruktur ausgebildet ist.

5. Verfahren nach Anspruch 4,
**dadurch gekennzeichnet,**
**dass** die Zwischenräume (16) mit einer Größe bemessen werden, die unter Berücksichtigung der Fertigungstoleranzen bei der Veränderung der Oberflächenstruktur eine ungewollte Beschädigung jeweils dem zu behandelnden Teilabschnitt (18) benachbart liegender Einzelfasern (12) verhindert.

6. Verfahren nach einem der Ansprüche 4 oder 5,
**dadurch gekennzeichnet,**
**dass** die Einzelfasern (12) vollständig in das Trägerband (13) eingebettet werden und der die Teilabschnitte (18) abdeckende Teil des Trägerbandes (13) vor der Veränderung der Oberflächenstruktur entfernt wird.

7. Verfahren nach Anspruch 6,
**dadurch gekennzeichnet,**
**dass** die teilweise Entfernung des Trägerbandes (13) und die Veränderung der Oberflächenstruktur der Teilabschnitte (18) mit einem Laser vorgenommen wird.

## Claims

1. Ribbon-shaped light guide having a number of parallel running individual optical fibers (12) that are surrounded by a cladding (14), there being provided in the cladding (14) a carrier tape (13) in which the individual fibers (12) are embedded while respectively observing an interspace (16) between neighboring individual fibers (12), the individual fibers (12) respectively being covered by the cladding (14) in defined segments (18) in which the material of the carrier tape (13) is removed from the individual fibers (12), and the individual fibers exhibiting a surface structure increasing the optical attenuation response in the defined segments (18), and the individual fibers (12) being fully embedded in the carrier tape (13) except for defined segments (18), and the regions of these segments (18) furthermore being filled by the material at the cladding (14).

2. Light guide according to Claim 1, **characterized in that** passive fibers (17) are arranged in the interspaces (16).

3. Light guide according to either of Claims 1 and 2, **characterized in that** the carrier tape (13) consists of a material that can be removed by means of laser ablation.

4. Method for producing a ribbon-shaped light guide according to Claim 1, in the case of which
- the individual optical fibers (12) are fixed parallel to one another with the aid of the carrier tape (13) by being fully embedded into the carrier tape (13) while observing respective interspaces (16),
- thereafter, the surface structure of the individual fibers (12) is altered in defined segments (18) with removal of the material of the carrier tape (13), and
- thereafter, the carrier tape (13) with the individual fibers (12) is provided with the cladding (14), the cladding (14) covering the segments (18), and a surface structure increasing the optical attenuation response being formed in the segments (18).

5. Method according to Claim 4, **characterized in that** the interspaces (16) are dimensioned with a size that, taking account of the manufacturing tolerances, respectively prevents undesired damage to the individual fibers (12) lying next to the segment (18) to be treated during the alteration of the surface structure.

6. Method according to either of Claims 4 and 5, **characterized in that** the individual fibers (12) are fully embedded in the carrier tape (13), and the part of the carrier tape (13) covering the segments (18) is removed before the alteration of the surface structure.

7. Method according to Claim 6, **characterized in that** the partial removal of the carrier tape (13) and the alteration of the surface structure of the segments (18) is undertaken with a laser.

## Revendications

1. Guide d'ondes de lumière en forme de bande, comprenant une pluralité de fibres ( 12 ) optiques individuelles s'étendant parallèlement et entourées d'une gaine ( 14 ), dans lequel il est prévu dans la gaine ( 14 ) une bande ( 13 ) support, dans laquelle les fibres ( 12 ) individuelles sont incorporées en maintenant respectivement un intervalle ( 16 ) entre des fibres ( 12 ) individuelles voisines, dans lequel les fibres ( 12 ) individuelles sont recouvertes par la gaine ( 14 ) respectivement dans des segments ( 18 ) définis, dans lesquels la matière de la bande ( 13 ) support est enlevée des fibres ( 12 ) individuelles, et elles ont, dans les segments ( 18 ) définis, une structure de surface augmentant l'atténuation optique et dans lequel les fibres ( 12 ) individuelles sont incorporées, à l'exception des segments ( 18 ) définis, complètement dans la bande ( 13 ) support, et dans lequel, en outre, les zones de ces segments ( 18 ) sont remplies par la matière de la gaine ( 14 ).

2. Guide d'ondes de lumière suivant la revendication 1,
**caractérisé**
**en ce que** des fibres ( 17 ) passives sont disposées dans les intervalles ( 16 ).

3. Guide d'ondes de lumière suivant l'une des revendications 1 ou 2,
**caractérisé**
**en ce que** la bande ( 13 ) support est en une matière, qui peut être enlevée au moyen d'une ablation laser.

4. Procédé de production d'une guide d'ondes de lumière sous forme de bande suivant la revendication 1, dans lequel
- les fibres ( 12 ) optiques individuelles sont immobilisées à l'aide de la bande ( 13 ) support en maintenant des intervalles ( 16 ) respectifs par incorporation complète dans la bande ( 13 ) support en étant parallèles entre elles,
- ensuite, la structure de surface des fibres ( 12 ) individuelles est modifiée dans les segments ( 18 ) définis, lors d'un enlèvement de la matière de la bande ( 13 ) support,
- ensuite, la bande ( 13 ) support ayant les fibres ( 12 ) individuelles est munie de la gaine ( 14 ), la gaine ( 14 ) recouvrant les segments ( 18 ), et une structure de surface augmentant l'atténuation optique étant formée dans les segments ( 18 ).

5. Procédé suivant la revendication 4,
**caractérisé,**
**en ce qu'**on donne aux intervalles ( 16 ) une dimension, qui, en tenant compte des tolérances de fabrication, empêche, lors de la modification de la structure de surface, d'endommager involontairement des fibres ( 12 ) individuelles voisines respectivement du segment ( 18 ) à traiter.

6. Procédé suivant l'une des revendications 4 ou 5,
**caractérisé**
**en ce que** des fibres ( 12 ) individuelles sont incorporées complètement dans la bande ( 13 ) support et la partie, recouvrant les segments ( 18 ), de la bande ( 13 ) support est enlevée avant la modification de la structure de surface.

7. Procédé suivant la revendication 6,
**caractérisé**
**en ce que** l'enlèvement partiel de la bande ( 13 ) support et la modification de la structure de surface des segments ( 18 ) sont effectués par un laser.
